# EUROPÄISCHE PATENTSCHRIFT

(11) **EP 3 882 762 B1**
(45) Veröffentlichungstag und Bekanntmachung des Hinweises auf die Patenterteilung: **11.10.2023**
(21) Anmeldenummer: 20164379.8
(22) Anmeldetag: 20.03.2020
(51) Int. Cl.: G06F 8/61, G06F 8/65

(54) **VERFAHREN ZUR INSTALLATION NEUER SOFTWARE UND SYSTEM**
METHOD FOR INSTALLING NEW SOFTWARE AND SYSTEM
PROCÉDÉ D'INSTALLATION D'UN NOUVEAU LOGICIEL ET SYSTÈME

(43) Veröffentlichungstag der Anmeldung: 22.09.2021
(73) Patentinhaber: Siemens Mobility GmbH, 81739 München (DE)
(72) Erfinder: Wischy Hernandez, Markus Alexander, 38106 Braunschweig (DE)
(74) Vertreter: Siemens Patent Attorneys

(56) Entgegenhaltungen:
- DE-A1-102019 109 672

## Beschreibung

Es wird ein Verfahren zur Installation neuer Software auf einer funktionalen Gruppe angegeben. Darüber hinaus wird ein System angegeben.

Dokument DE 10 2019 109672 A1 beschreibt ein System, ein Computerprogrammprodukt und ein computerimplementiertes Verfahren zum Aktualisieren einer Softwarekonfiguration eines Fahrzeugs. Eine Kommunikationsschnittstelle kommuniziert mit mehreren elektronischen Steuereinheiten des Fahrzeugs und einem Prozessor.

Eine zu lösende Aufgabe besteht darin, ein Verfahren zur Installation einer neuen Software auf mehreren funktionalen Gruppen mit jeweils mehreren Komponenten anzugeben, das auch auf kritische Infrastruktursysteme sicher anwendbar ist. Eine weitere zu lösende Aufgabe besteht darin, ein System zur Durchführung eines solchen Verfahrens anzugeben.

Diese Aufgaben werden unter anderem durch die Gegenstände der unabhängigen Patentansprüche gelöst. Vorteilhafte Ausgestaltungen und Weiterbildungen sind Gegenstand der abhängigen Patentansprüche und gehen weiterhin aus der nachfolgenden Beschreibung und den Zeichnungen hervor.

Zunächst wird das Verfahren angegeben. Das Verfahren dient zur Installation einer neuen Software auf einer funktionalen Gruppe, wobei die funktionale Gruppe eine Mehrzahl von Komponenten umfasst. Die neue Software umfasst für mehrere ausgewählte Komponenten der funktionalen Gruppe neue Softwarepakete. Jede ausgewählte Komponente der funktionalen Gruppe weist einen Prozessor (CPU), eine Kommunikationsschnittstelle und einen Speicher, insbesondere einen Arbeitsspeicher und/oder eine Festplatte, auf.

Bei der funktionalen Gruppe handelt es sich um eine Ansammlung von logisch miteinander verknüpften Komponenten. Insbesondere kommunizieren die Komponenten der funktionalen Gruppe während des Betriebs miteinander. Bei den Komponenten handelt es sich insbesondere um elektronische Geräte. Beispielsweise handelt es sich bei der funktionalen Gruppe um ein System eines Schienenverkehrsnetzes, beispielsweise um ein Stellwerk oder einen Stellwerkbereich. Bei den Komponenten des Stellwerks handelt es sich dann um Stellwerkobjekte. Beispielsweise ist eine Komponente ein Weichensteller, eine andere Komponente ein Bahnsignal und eine noch weitere Komponente ein Achszähler.

Die neue Software setzt sich aus mehreren Softwarepaketen zusammen, wobei jedes Softwarepaket einer ausgewählten Komponente der funktionalen Gruppe eindeutig zugeordnet wird. Die Softwarepakete können sich untereinander unterscheiden, da sie für unterschiedliche Komponenten der funktionalen Gruppe bestimmt sind. Die ausgewählten Komponenten der funktionalen Gruppe sind diejenigen Komponenten der funktionalen Gruppe, für die die neue Software ein neues Softwarepaket bereitstellt.

Die neue Software kann für jede Komponente der funktionalen Gruppe ein neues Softwarepaket aufweisen. Dann sind alle Komponenten der funktionalen Gruppe ausgewählte Komponenten.

Bei dem erfindungsgemäßen Verfahren wird nacheinander auf mehreren funktionalen Gruppen neue Software installiert. Jede funktionale Gruppe umfasst dabei mehrere Komponenten. Die zuvor und im Folgenden im Zusammenhang mit der einen funktionalen Gruppe offenbarten Merkmale und Verfahrensschritte sind auch für alle weiteren funktionalen Gruppen offenbart beziehungsweise werden bevorzugt bei jeder weiteren funktionalen Gruppe durchgeführt. Insbesondere wird die Installation von neuer Software auf einer funktionalen Gruppe erst durchgeführt, wenn die Installation für alle ausgewählten Komponenten der vorhergehenden funktionalen Gruppe erfolgreich abgeschlossen ist.

Beispielsweise wird eine neue Software zunächst auf einer ersten funktionalen Gruppe (Testgruppe) installiert. Zum Beispiel handelt sich bei der ersten funktionalen Gruppe um ein Metrosystem. Danach wird getestet, ob die neue Software auf der ersten funktionalen Gruppe fehlerfrei funktioniert (Testphase). Nach erfolgreicher Testphase wird die neue Software auf einer zweiten funktionalen Gruppe (Hilfsgruppe) installiert. Bei der zweiten funktionalen Gruppe handelt es sich beispielsweise um eine Gruppe aus einem nicht kritischen Infrastruktursystem, beispielsweise um eine Nebenstrecke eines Schienensystems. Danach wird dann wieder getestet, ob die neue Software auf der zweiten funktionalen Gruppe fehlerfrei funktioniert. Ist dies der Fall, so kann dann die neue Software auf einer dritten funktionalen Gruppe (Hauptgruppe) installiert werden. Bei der dritten funktionalen Gruppe handelt es sich beispielsweise um eine Gruppe eines kritischen Infrastruktursystems, zum Beispiel um eine Hauptstrecke eines Schienensystems.

Gemäß zumindest einer Ausführungsform wird bei dem Verfahren an jede der ausgewählten Komponenten der funktionalen Gruppe das zugehörige neue Softwarepaket übermittelt. Dies geschieht durch eine Zentraleinheit. Bei der Zentraleinheit, auch zentrales Aktualisierungssystem oder Koordinator genannt, handelt es sich insbesondere um einen Zentralcomputer. Die Zentraleinheit kann von der funktionalen Gruppe entfernt sein, beispielsweise um einige Kilometer. Die neuen Softwarepakete werden von der Zentraleinheit an die ausgewählten Komponenten beispielsweise drahtlos oder drahtgebunden übertragen.

Gemäß zumindest einer Ausführungsform wird bei dem Verfahren danach auf jeder der ausgewählten Komponenten die Installation des auf sie übertragenen neuen Softwarepakets gestartet. Das Starten beziehungsweise Aktivieren der Installation erfolgt bevorzugt zentral durch die Zentraleinheit. Zum Beispiel wird die Installation gleichzeitig auf allen ausgewählten Komponenten gestartet. Insbesondere wird die Installation auf den ausgewählten Komponenten aber erst gestartet, wenn an jede der ausgewählten Komponenten das zugeordnete neue Softwarepaket erfolgreich übermittelt wurde.

Gemäß zumindest einer Ausführungsform wird bei dem Verfahren danach überprüft, ob die Installation auf jeder der ausgewählten Komponenten erfolgreich war.

Gemäß zumindest einer Ausführungsform wird bei dem Verfahren die funktionale Gruppe mit der neuen Software betrieben, aber nur falls die Installation auf jeder der ausgewählten Komponenten erfolgreich war. Das heißt, jede der ausgewählten Komponenten wird dann mit dem jeweiligen installierten neuen Softwarepaket betrieben. Die Komponenten der funktionalen Gruppe, für die kein neues Softwarepaket bereitgestellt wurde, werden beispielsweise mit einem alten Softwarepaket betrieben.

Mit anderen Worten wird, solange die Installation der neuen Software auf mindestens einer der ausgewählten Komponenten nicht erfolgreich war, die funktionale Gruppe nicht mit der neuen Software betrieben. Das bedeutet, dass auch keine der ausgewählten Komponenten mit dem zugeordneten neuen Softwarepaket betrieben wird, selbst wenn die Installation auf dieser ausgewählten Komponente erfolgreich war. War die Installation auf einer ausgewählten Komponente nicht erfolgreich, kann die Installation auf dieser oder auf allen ausgewählten Komponenten neu gestartet werden. Dies kann solange wiederholt werden, bis die Installation auf allen ausgewählten Komponenten erfolgreich war oder bis das Verfahren abgebrochen wird.

In mindestens einer Ausführungsform des Verfahrens zur Installation einer neuen Software auf einer funktionalen Gruppe, wobei
- die funktionale Gruppe eine Mehrzahl von Komponenten umfasst und die neue Software für mehrere ausgewählte Komponenten der funktionalen Gruppe neue Softwarepakte umfasst und
- jede ausgewählte Komponente einen Prozessor, eine Kommunikationsschnittstelle und einen Speicher umfasst,
- übermittelt eine Zentraleinheit an jede der ausgewählten Komponenten der funktionalen Gruppe das zugehörige neue Softwarepakt,
- wird danach auf jeder der ausgewählten Komponenten die Installation des auf sie übertragenen neuen Softwarepakets gestartet,
- wird danach überprüft, ob die Installation auf jeder der ausgewählten Komponenten erfolgreich war, und
- wird die funktionale Gruppe mit der neuen Software betrieben, aber nur falls die Installation auf jeder der ausgewählten Komponenten erfolgreich war.

Der vorliegenden Erfindung liegen insbesondere folgende Überlegungen zu Grunde: Funktionale Gruppen, insbesondere Teilsysteme von komplexen, kritischen Infrastruktursystemen, wie zum Beispiel Bahnsignalisierungsanlagen oder Stellwerke, umfassen eine Vielzahl von einzelnen, miteinander kommunizierenden Komponenten. Muss nun die auf den Komponenten laufende Software (Firmware, Konfiguration) aktualisiert werden, sollte dies für alle relevanten (ausgewählten) Komponenten der funktionalen Gruppe gleichzeitig geschehen. Dies erfordert eine koordinierte Aktion zur Aktualisierung. Bei funktionalen Gruppen kritischer Infrastruktursystemen, die typischerweise einem 24/7-Dauerbetrieb folgen, ist eine möglichst kurze Dauer dieser koordinierten Aktion gefordert.

Softwareaktualisierungen werden in nächster Zukunft immer wichtiger, da die gesetzlichen Anforderungen zur IT-Sicherheit und die Zahl der Cyberangriffe steigen. Dies führt dazu, dass Sicherheitsaktualisierungen regelmäßig auf die Komponenten von kritischen Infrastruktursystemen gebracht werden müssen.

Das hier beschriebene Verfahren trägt diesen Überlegungen Rechnung und verwendet das Verfahren der Transaktion zur sicheren Installation neuer Softwarepakete auf ausgewählten Komponenten einer funktionalen Gruppe. Das Verfahren stellt die ACID-Eigenschaften sicher. Dabei steht das A für Atomicity (Unteilbarkeit, entweder alle ausgewählten Komponenten oder keine ausgewählte Komponente wird mit dem neu installierten Softwarepaket betrieben), das C steht für Consistency (die funktionale Gruppe bleibt in einem konsistenten Zustand), das I steht für Isolation (keine Nebeneffekte auf andere Prozesse), das D steht für Durability (die Aktualisierung bleibt bestehen, auch bei Stromausfall oder Neustart).

Das Verfahren ermöglicht die gleichzeitige Aktualisierung aller ausgewählten Komponenten einer funktionalen Gruppe von einem entfernten, zentralen Ort (Zentraleinheit). Da das Verfahren automatisiert ist, kann die Softwareaktualisierung wesentlich schneller durchgeführt werden als dies manuell möglich wäre.

Eine gleichzeitige Aktualisierung von allen ausgewählten Komponenten einer funktionalen Gruppe reduziert auch den Integrationsaufwand, da für jede Kombination von Softwarezuständen auf den jeweiligen Komponenten ein Test durchgeführt werden muss. Dadurch dass die ausgewählten Komponenten im Wesentlichen zeitgleich aktualisiert werden, wird der Testaufwand reduziert, da die Anzahl möglicher Softwarestandvariationen zwischen den Komponenten und damit die Anzahl der Tests reduziert wird.

Gemäß zumindest einer Ausführungsform des Verfahrens umfasst die neue Software eine Aktualisierung einer alten Software, wobei die funktionale Gruppe vor der Durchführung des Verfahrens mit der alten Software betrieben wird. Entsprechend läuft vor der Durchführung des Verfahrens auf jeder Komponente der funktionalen Gruppe ein altes Softwarepaket.

Gemäß zumindest einer Ausführungsform wird, falls die Installation auf mindestens einer der ausgewählten Komponenten nicht erfolgreich war, die funktionale Gruppe mit der alten Software weiter betrieben. Alle Komponenten der funktionalen Gruppe werden entsprechend mit alten Softwarepaketen betrieben (sogenannter Rollback). Der Rollback kann nach einem oder mehreren Versuchen zur Installation der neuen Softwarepakete auf den ausgewählten Komponenten durchgeführt werden.

Auf diese Weise garantiert das Verfahren zum einen die Aktualisierung auf einen konsistenten Systemzustand und kann bei Fehlerfällen den alten, ebenfalls konsistenten Systemzustand wieder herstellen.

Gemäß zumindest einer Ausführungsform übermittelt die Zentraleinheit vor der Installation der neuen Softwarepakete an jede der ausgewählten Komponenten der funktionalen Gruppe den Befehl, in einen Wartungszustand überzugehen. Danach wird überprüft, ob die ausgewählten Komponenten der funktionalen Gruppe sich im Wartungszustand befinden. Erst wenn alle ausgewählten Komponenten im Wartungszustand sind, wird die Installation der neuen Softwarepakete gestartet.

Falls zumindest eine der ausgewählten Komponenten sich bei der Überprüfung nicht im Wartungszustand befindet, wird zum Beispiel solange wiederholt der Befehl versendet, in den Wartungszustand überzugehen, bis alle ausgewählten Komponenten im Wartungszustand sind oder das Verfahren abgebrochen wird.

Jede der ausgewählten Komponenten der funktionalen Gruppe kann also zumindest zwei Zustände einnehmen, einen Wartungszustand und einen Betriebszustand. Im Betriebszustand wird die Komponente bestimmungsgemäß betrieben. Vor der Übermittlung des Befehls zum Übergang in den Wartungszustand befindet sich bevorzugt jede Komponente der funktionalen Gruppe im Betriebszustand. Die Versetzung der ausgewählten Komponenten in den Wartungsmodus kann vor oder nach der Übermittlung der neuen Softwarepakete erfolgen. Die Steuerung und Überwachung der Zustände erfolgt bevorzugt zentral durch die Zentraleinheit.

Mit anderen Worten wird das Verfahren gemäß einem ZweiPhasen-Commit-Protokoll durchgeführt. In der ersten Phase, der Vorbereitungsphase, werden die ausgewählten Komponenten in den Wartungszustand versetzt. Auch die Übertragung der neuen Softwarepakete kann der Vorbereitungsphase zugeordnet werden. In der zweiten Phase, der Durchführungsphase, wird die Installation gestartet. Falls eine der ausgewählten Komponenten den Wartungszustand nicht erreicht oder die Installation nicht erfolgreich ist, kommt es zum Beispiel zum sogenannten Rollback, nachdem die funktionale Gruppe mit der alten Software betrieben wird. Andernfalls kommt es zur Finalisierung (Commit), nachdem die funktionale Gruppe mit der neuen Software betrieben werden kann.

Gemäß zumindest einer Ausführungsform wird die Installation der neuen Softwarepakete auf den ausgewählten Komponenten von der Zentraleinheit gesteuert und/oder überwacht. Insbesondere wird die Installation der neuen Softwarepakete auf den ausgewählten Komponenten durch die Zentraleinheit gestartet, bevorzugt so, dass die Installation auf allen Komponenten gleichzeitig gestartet wird.

Gemäß zumindest einer Ausführungsform erfolgt die Übertragung der neuen Softwarepakete auf die ausgewählten Komponenten unabhängig von der Installation der neuen Softwarepakete auf den ausgewählten Komponenten. Insbesondere erfolgt die Übertragung zeitlich versetzt zur Installation. Ein zeitlicher Abstand zwischen der Übertragung und der Installation kann beispielsweise mehrere Stunden oder mehrere Tage betragen. Beispielsweise wird die neue Software von einem Hersteller zunächst an die Zentraleinheit übermittelt und danach werden die Softwarepakete der neuen Software von der Zentraleinheit an die ausgewählten Komponenten übermittelt. Erst nachdem dieser Auslieferungsprozess für alle ausgewählten Komponenten erfolgreich beendet ist, wird durch die Zentraleinheit die Installation gestartet.

Gemäß zumindest einer Ausführungsform umfasst jede Komponente zwei Partitionen. Die neuen Softwarepakete werden jeweils auf einer ersten Partition der ausgewählten Komponenten installiert. Auf jeweiligen zweiten Partitionen der ausgewählten Komponenten sind alte Softwarepakete der alten Software gespeichert. Dies erlaubt bei jeder ausgewählten Komponente wieder von dem neuen Softwarepaket auf das alte Softwarepaket zu wechseln (Rollback), beispielsweise falls bei einer der ausgewählten Komponenten die Installation nicht erfolgreich war.

Wenn die Installation auf allen ausgewählten Komponenten erfolgreich war, und gegebenenfalls nach einer Testphase der neuen Software, werden zum Beispiel die alten Softwarepakete mit den neuen Softwarepaketen in den zweiten Partitionen überschrieben.

Statt mehreren Partitionen kann ein Rollback auch durch Backupdateien ermöglicht werden, zum Beispiel bei der Aktualisierung von Konfigurationsdateien. Bei einem Rollback können die Backupdateien wieder reaktiviert werden.

Gemäß zumindest einer Ausführungsform erfolgt die Übertragung der neuen Softwarepakete drahtlos.

Gemäß zumindest einer Ausführungsform ist die funktionale Gruppe Teil eines kritischen Infrastruktursystems oder bildet ein kritisches Infrastruktursystem. Unter einem kritischen Infrastruktursystem ist ein kritisches Infrastruktursystem im Sinne der EU-Richtlinie 2008/114/EG zu verstehen. Beispielsweise handelt es sich bei dem kritischen Infrastruktursystem um ein System aus dem Bereich Transport und Verkehr, insbesondere Schienenverkehr.

Gemäß zumindest einer Ausführungsform ist das kritische Infrastruktursystem ein Schienenverkehrssystem.

Gemäß zumindest einer Ausführungsform ist die funktionale Gruppe eine Signalanlage oder ein Stellwerk und/oder ein Stellwerksbereich und/oder eine Teststrecke für ein Schienenfahrzeug und/oder eine Nebenstrecke für ein Schienenfahrzeug und/oder eine Hauptstrecke für ein Schienenfahrzeug.

Als nächstes wird das System angegeben. Das System ist insbesondere dazu eingerichtet, ein hier beschriebenes Verfahren auszuführen. Alle im Zusammenhang mit dem Verfahren offenbarten Merkmale sind daher für das System offenbart und umgekehrt.

Gemäß zumindest einer Ausführungsform umfasst das System eine Zentraleinheit und zumindest eine funktionale Gruppe mit mehreren Komponenten. Jede Komponente umfasst einen Prozessor, eine Kommunikationsschnittstelle und einen Speicher. Das System ist dazu eingerichtet, ein hier beschriebenes Verfahren auszuführen.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert, wobei
Figur 1 ein Ausführungsbeispiel einer funktionalen Gruppe zeigt,
Figuren 2 bis 4 Ausführungsbeispiele des Verfahrens anhand von Ablaufdiagrammen zeigen und
Figur 5 ein Ausführungsbeispiel einer Komponente 10 zeigt.

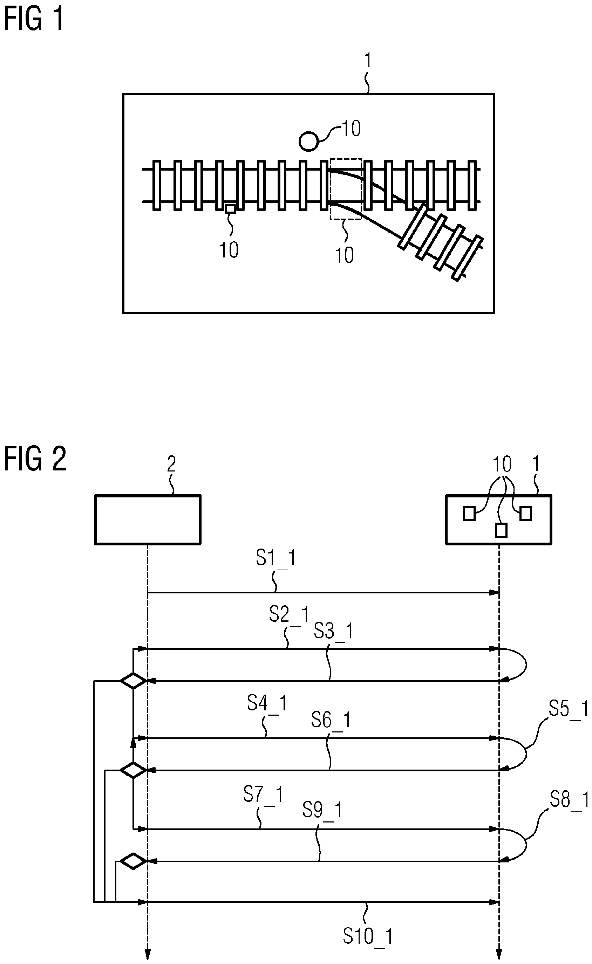

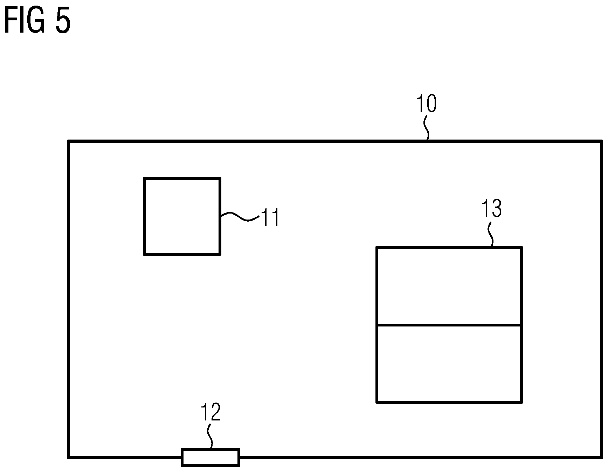

Figur 1 zeigt ein Ausführungsbeispiel einer funktionalen Gruppe 1. Dabei handelt es sich um einen Abschnitt eines Schienennetzes, genauer gesagt um ein Stellwerk. Die funktionale Gruppe 1 umfasst verschiedene, logisch miteinander verknüpfte und miteinander kommunizierende Komponenten 10. Diese umfassen jeweils einen Prozessor 11, einen Speicher 13 und eine Kommunikationsschnittstelle 12 (siehe auch Figur 5). Bei einer Komponente 10 handelt es sich um einen Weichensteller, bei einer weiteren Komponente 10 um eine Signalanlage und bei einer noch weiteren Komponente 10 um einen Achszähler.

Figur 2 zeigt ein erstes Ausführungsbeispiel des Verfahrens anhand eines Ablaufdiagramms. Die gestrichelten Pfeile deuten die Zeitrichtung an. Bei dem Verfahren ist eine Zentraleinheit 2 und eine funktionale Gruppe 1 bereitgestellt, wobei die funktionale Gruppe 1 mehrere Komponenten 10 umfasst. Beispielsweise handelt es sich bei der funktionalen Gruppe 1 um die der Figur 1. Jede Komponente 10 der funktionalen Gruppe 1 umfasst einen Prozessor 11, eine Kommunikationsschnittstelle 12 und einen Speicher 13 (siehe auch Figur 5). Die Speicher 13 haben beispielsweise jeweils zwei Partitionen, wobei zunächst auf beiden Partitionen alte Softwarepakete gespeichert sind.

In einem ersten Schritt S1_1 übermittelt die Zentraleinheit 2 an ausgewählte Komponenten 10 der funktionalen Gruppe 1 ein zugeordnetes neues Softwarepaket einer neuen Software. Falls jede der ausgewählten Komponenten 10 das ihr zugeordnete, neue Softwarepaket erhalten hat, wird in einem Schritt S2_1 von der Zentraleinheit 2 an jede der ausgewählten Komponenten 10 ein Befehl versendet, in einen Wartungszustand überzugehen.

In einem Schritt S3_1 wird von der Zentraleinheit 2 überprüft, ob alle ausgewählten Komponenten 10 in den Wartungszustand übergegangen sind. Erst wenn dies für jede der ausgewählten Komponenten 20 der Fall ist, wird in einem nächsten Schritt S4_1 von der Zentraleinheit 2 der Befehl zur Installation an jede der ausgewählten Komponenten 10 übermittelt. Im Schritt S5_1 wird die Installation der neuen Softwarepakete auf den ausgewählten Komponenten 10 der funktionalen Gruppe 1 gestartet.

Falls im Schritt S3_1 festgestellt wird, dass mindestens eine der ausgewählten Komponenten 10 nicht in den Wartungszustand übergegangen ist, wird beispielsweise erneut versucht, alle ausgewählten Komponenten in den Wartungszustand 10 zu versetzen oder das Verfahren wird abgebrochen. Die Installation wird hier jedenfalls nicht gestartet, solange nicht alle ausgewählten Komponenten 10 im Wartungszustand sind.

Nach der Installation der neuen Softwarepakete auf den ausgewählten Komponenten 10 wird in einem Schritt S6_1 von der Zentraleinheit 2 überprüft, ob die Installation auf jeder der ausgewählten Komponenten 10 erfolgreich war. Nur falls dies der Fall ist, wird in einem Schritt S7_1 der Befehl gegeben, die alten Softwarepakte auf den zweiten Partitionen der Komponenten 10 mit den neuen Softwarepaketen zu überschreiben. Das Überschreiben wird im Schritt S8_1 durchgeführt. Danach wird zurückgegeben, ob das Überschreiben der zweiten Partitionen erfolgreich war (Schritt S9_1).

Nur falls die Installation auf allen ausgewählten Komponenten 10 erfolgreich war, wird gleichzeitig oder nach dem Schritt S7_1 der Schritt S10_1 ausgeführt, bei dem die Komponenten 10 vom Wartungszustand wieder in den Betriebszustand versetzt werden und nun mit den jeweiligen neuen Softwarepaketen betrieben werden. Entsprechend wird die funktionale Gruppe 1 mit der neuen Software betrieben werden.

Das Überschreiben der zweiten Partitionen mit den neuen Softwarepaketen (Schritte S7_1 und S8_1) kann auch erst nach dem Schritt S10_1 ausgeführt werden, beispielsweise nachdem der Betrieb der funktionalen Gruppe 1 mit der Software über einen vorgegebenen Zeitraum getestet wurde.

Falls nicht alle ausgewählten Komponenten in den Wartungszustand versetzt werden konnten oder falls die Installation der neuen Softwarepakte auf nicht allen ausgewählten Komponenten erfolgreich war, so können die entsprechenden Schritte erneut ausgeführt werden. Alternativ kann direkt mit dem so genannten Rollback begonnen werden, bei dem im Schritt S10_1 alle Komponenten zurück in den Betriebszustand versetzt werden und jeweils mit den alten Softwarepaketen betrieben werden, so dass die gesamte funktionale Gruppe 1 weiter mit der alten Software betrieben wird.

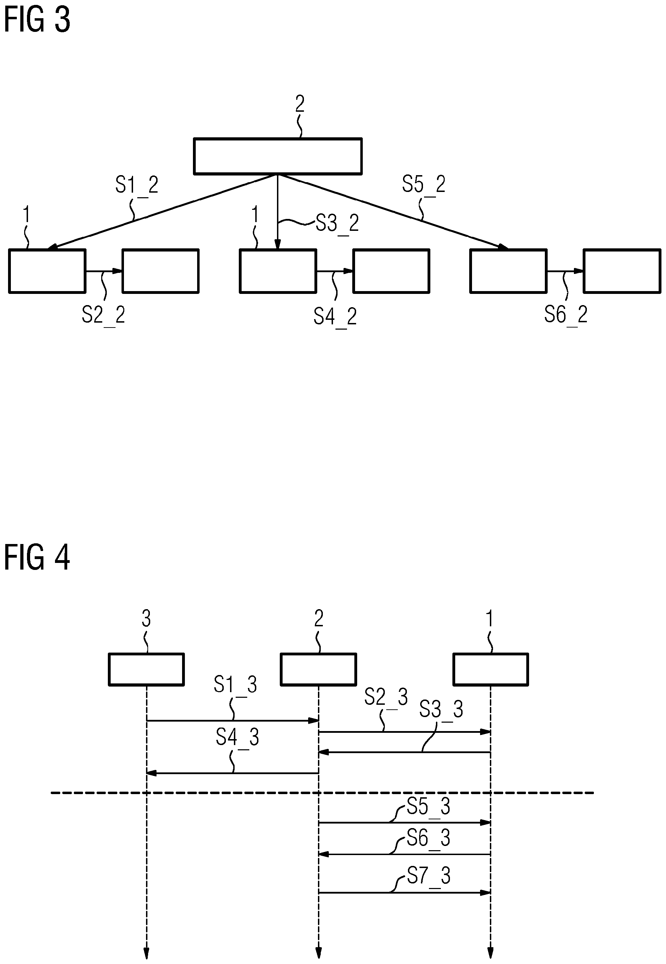

Figur 3 zeigt ein weiteres Ausführungsbeispiel des Verfahrens anhand eines Ablaufdiagramms. Zunächst wird in einem Schritt S1_2 die Installation neuer Software auf einer ersten funktionalen Gruppe 1 gestartet. Bei der ersten funktionalen Gruppe 1 handelt es sich um eine Testgruppe. Für die Installation neuer Software auf der ersten funktionalen Gruppe werden beispielsweise die im Zusammenhang mit der Figur 2 beschriebenen Schritte ausgeführt.

Falls die Installation auf allen ausgewählten Komponenten der ersten funktionalen Gruppe 1 erfolgreich war und die erste funktionale Gruppe 1 mit der neuen Software betrieben wird, wird in einem Schritt S2_2 eine Testphase durchgeführt, in der die neue Software für einen vorgegebenen Zeitraum auf der ersten funktionalen Gruppe 1 getestet wird.

Ist dieser Test erfolgreich, so wird in einem Schritt S3_2 die neue Software auf einer zweiten funktionalen Gruppe 1 installiert, wobei wiederum die im Zusammenhang mit der Figur 2 beschriebenen Verfahrensschritte ausgeführt werden können. Die zweite funktionale Gruppe 1 ist eine Hilfsgruppe, beispielsweise eine funktionale Gruppe eines nichtkritischen Infrastruktursystems. Nach einer erfolgreichen Installation auf der zweiten funktionalen Gruppe 1 wird in einem Schritt S4_2 wieder eine Testphase durchgeführt.

Ist die Testphase für die zweite funktionale Gruppe 1 erfolgreich, so wird in einem Schritt S5_2 die Installation der neuen Software auf einer dritten funktionalen Gruppe 1 durchgeführt, wobei wiederum die im Zusammenhang mit der Figur 2 beschriebenen Verfahrensschritte durchgeführt werden können. Bei der dritten funktionalen Gruppe 1 handelt es sich beispielsweise um eine funktionale Gruppe eines kritischen Infrastruktursystems. Auch mit dieser dritten funktionalen Gruppe kann danach in einem Schritt S6_2 eine Testphase durchgeführt werden.

Figur 4 zeigt ein weiteres Ausführungsbeispiel des Verfahrens anhand eines Ablaufdiagramms. Die gestrichelten Pfeile geben wieder die Zeitrichtung an. Das Verfahren ist in zwei zeitlich getrennte Abschnitte unterteilt (siehe dicke gestrichelte Linie).

Im ersten zeitlichen Abschnitt wird von einem Hersteller 3 oder Systemintegrator 3 oder Wartungsdienstleister 3 in einem Schritt S1_3 eine neue Software an eine Zentraleinheit 2 übermittelt. Danach werden von der Zentraleinheit 2 in einem Schritt S2_3 die neuen Softwarepakete der neuen Software an die funktionale Gruppe 1 und die zugehörigen ausgewählten Komponenten 10 übermittelt. In den Schritten S3_3 und S4_3 wird überprüft, ob die Übermittlung sowohl vom Hersteller 3 an die Zentraleinheit 2 als auch von der Zentraleinheit 2 an die funktionale Gruppe 1 erfolgreich war.

Im zweiten zeitlichen Abschnitt wird in einem Schritt S5_3 die Installation der neuen Softwarepakete auf den ausgewählten Komponenten 10 der funktionalen Gruppe 1 gestartet und in einem Schritt S6_3 überprüft, ob die Installation auf jeder der ausgewählten Komponenten 10 erfolgreich war. Danach wird im Schritt S7_3 die funktionale Gruppe 1 mit der neuen Software betrieben.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: funktionale Gruppe
- 2: Zentraleinheit
- 10: Komponente
- 11: Prozessor
- 12: Kommunikationsschnittstelle
- 13: Speicher
- Si_j: Verfahrensschritt

## Patentansprüche

1. Verfahren zur Installation einer neuen Software auf mindestens einer funktionalen Gruppe (1), wobei
- die funktionale Gruppe (1) eine Mehrzahl von Komponenten (10) umfasst und die neue Software für mehrere ausgewählte Komponenten (10) der funktionalen Gruppe (1) neue Softwarepakete umfasst und
- jede ausgewählte Komponente (10) einen Prozessor, eine Kommunikationsschnittstelle und einen Speicher umfasst, wobei bei dem Verfahren
- eine Zentraleinheit (2) an jede der ausgewählten Komponenten (10) das zugehörige neue Softwarepaket übermittelt,
- danach auf jeder der ausgewählten Komponenten (10) die Installation des auf sie übertragenen neuen Softwarepakets gestartet wird,
- danach überprüft wird, ob die Installation auf jeder der ausgewählten Komponenten (10) erfolgreich war, und
- nur falls die Installation auf jeder der ausgewählten Komponenten (10) erfolgreich war, die funktionale Gruppe (1) mit der neuen Software betrieben wird
**dadurch gekennzeichnet,**
**dass**
• nacheinander auf einer ersten funktionalen Gruppe (1) und dann auf mindestens einer weiteren funktionalen Gruppe neue Software installiert wird, wobei jede funktionale Gruppe (1) mehrere Komponenten (10) umfasst und
• die Installation von neuer Software auf einer weiteren funktionalen Gruppe erst durchgeführt wird, wenn die Installation für alle ausgewählten Komponenten der vorhergehenden funktionalen Gruppe erfolgreich abgeschlossen ist.

2. Verfahren nach Anspruch 1, wobei
- die neue Software eine Aktualisierung einer alten Software umfasst, wobei die funktionale Gruppe (1) vor der Durchführung des Verfahrens mit der alten Software betrieben wird, und
- falls die Installation auf mindestens einer der ausgewählten Komponenten (10) nicht erfolgreich war, die funktionale Gruppe (1) mit der alten Software weiter betrieben wird.

3. Verfahren nach Anspruch 2, wobei
- jede ausgewählte Komponente (10) zwei Partitionen umfasst,
- die neuen Softwarepakete jeweils auf einer ersten Partition der ausgewählten Komponenten (10) installiert werden, und
- auf jeweiligen zweiten Partitionen der ausgewählten Komponenten (10) alte Softwarepakete der alten Software gespeichert sind.

4. Verfahren nach einem der vorhergehenden Ansprüche, wobei
- vor der Installation der neuen Softwarepakete die Zentraleinheit (2) an jede der ausgewählten Komponenten (10) der funktionalen Gruppe (1) den Befehl übermittelt, in einen Wartungszustand überzugehen,
- danach überprüft wird, ob die ausgewählten Komponenten (10) der funktionalen Gruppe (1) sich im Wartungszustand befinden, und
- erst wenn alle ausgewählten Komponenten (10) im Wartungszustand sind, die Installation der neuen Softwarepakte gestartet wird.

5. Verfahren nach einem der vorhergehenden Ansprüche, wobei die Installation der neuen Softwarepakete auf den ausgewählten Komponenten (10) von der Zentraleinheit (2) gesteuert und/oder überwacht wird.

6. Verfahren nach einem der vorhergehenden Ansprüche,
wobei die Übertragung der neuen Softwarepakete auf die ausgewählten Komponenten (10) unabhängig von der Installation der neuen Softwarepakete auf den ausgewählten Komponenten (10) erfolgt.

7. Verfahren nach einem der vorhergehenden Ansprüche, wobei die Übertragung der neuen Softwarepakete drahtlos erfolgt.

8. Verfahren nach einem der vorhergehenden Ansprüche, wobei die funktionale Gruppe (1) Teil eines kritischen Infrastruktursystems ist.

9. Verfahren nach Anspruch 8, wobei
- das kritische Infrastruktursystem ein Schienenverkehrssystem ist, und
- die funktionale Gruppe (1) eine Signalanlage oder ein Stellwerk oder ein Stellwerksbereich oder eine Teststrecke für ein Schienenfahrzeug oder eine Nebenstrecke für ein Schienenfahrzeug oder eine Hauptstrecke für ein Schienenfahrzeug ist.

10. System, umfassend
- eine Zentraleinheit (2), und
- eine funktionale Gruppe (1) mit mehreren Komponenten (10), wobei
- jede Komponente (10) einen Prozessor, eine Kommunikationsschnittstelle und einen Speicher umfasst, und
- das System dazu eingerichtet ist, ein Verfahren nach einem der vorhergehenden Ansprüche auszuführen.

## Claims

1. Method for installing new software on at least one functional group (1), wherein
- the functional group (1) comprises a plurality of components (10) and the new software comprises new software packets for a number of selected components (10) of the functional group (1) and
- each selected component (10) comprises a processor, a communication interface and a storage unit,
wherein with the method
- a central unit (2) transfers the associated new software packet to each of the selected components (10),
- subsequently the installation of the new software packet transmitted thereupon is started on each of the selected components (10),
- a check is then carried out to determine whether the installation was successful on each of the selected components (10), and
- only if the installation was successful on each of the selected components will the function group (1) be operated with the new software,
**characterised in that**
• new software is installed successively on a first functional group (1) and then on at least one further functional group, wherein each functional group (1) comprises a number of components (10) and
• the installation of new software on a further functional group is only carried out when the installation is successfully concluded for all selected components of the preceding functional group.

2. Method according to claim 1, wherein
- the new software comprises an updating of old software, wherein the functional group (1) is operated before carrying out the method with the old software, and
- if the installation on at least one of the selected components (10) was not successful, the functional group (1) is further operated with the old software.

3. Method according to claim 2, wherein
- each selected component (10) comprises two partitions,
- the new software packets are installed in each case on a first partition of the selected components (10), and
- old software packets of the old software are stored on respective second partitions of the selected components (10).

4. Method according to one of the preceding claims, wherein
- before the installation of the new software packets, the central unit (2) on each of the selected components (10) of the functional group (1) transmits the command to pass over into a maintenance state,
- a check is then carried out to determine whether the selected components (10) of the functional group (1) are in the maintenance state, and
- only when all selected components (10) are in the maintenance state is the installation of the new software packets started.

5. Method according to one of the preceding claims,
wherein the installation of the new software packets on the selected components (10) is controlled and/or monitored by the central unit (2).

6. Method according to one of the preceding claims,
wherein the transmission of the new software packets to the selected components (10) is carried out independently of the installation of the new software packets on the selected components (10).

7. Method according to one of the preceding claims, wherein the transmission of the new software packets is carried out wirelessly.

8. Method according to one of the preceding claims, wherein the functional group (1) is part of a critical infrastructure system.

9. Method according to claim 8, wherein
- the critical infrastructure system is a rail traffic system, and
- the functional group (1) is a signalling system or a signal box or a track control sector or a test track for a rail vehicle or a local track for a rail vehicle or a main track for a rail vehicle.

10. System, comprising
- a central unit (2), and
- a functional group (1) with a number of components (10), wherein
- each component (10) comprises a processor, a communication interface and a storage unit, and
- the system is designed to execute a method according to one of the preceding claims.

## Revendications

1. Procédé d'installation d'un logiciel nouveau sur au moins un groupe (1) fonctionnel, dans lequel
- le groupe (1) fonctionnel comprend une pluralité de composants (10) et le logiciel nouveau comprend des paquets de logiciel nouveaux pour plusieurs composants (10) sélectionnés du groupe (1) fonctionnel, et
- chaque composant (10) sélectionné comprend un processeur, une interface de communication et une mémoire,
dans lequel, dans le procédé
- une unité (2) centrale transmet à chacun des composants (10) sélectionnés le paquet de logiciel nouveau lui appartenant,
- ensuite, on lance sur chacun des composants (10) sélectionnés l'installation du paquet de logiciel nouveau, qui lui a été transmis,
- on contrôle ensuite si l'installation sur chacun des composants (10) sélectionnés a été couronnée de succès, et
- ce n'est que si l'installation sur chacun des composants (10) sélectionnés a été couronnée de succès que l'on fait fonctionner le groupe (1) fonctionnel avec le logiciel nouveau, **caractérisé en ce que**
• on installe successivement sur un premier groupe (1) fonctionnel et ensuite sur au moins un autre groupe fonctionnel, un logiciel nouveau, chaque groupe (1) fonctionnel comprenant plusieurs composants (10), et
• on effectue l'installation d'un logiciel nouveau sur un autre groupe fonctionnel, seulement si l'installation s'est terminée avec succès pour tous les composants sélectionnés du groupe fonctionnel précédent.

2. Procédé suivant la revendication 1, dans lequel
- le logiciel nouveau comprend une mise à jour d'un logiciel ancien, dans lequel on fait fonctionner le groupe (1) fonctionnel avec le logiciel ancien avant d'effectuer le procédé, et
- si l'installation sur au moins l'un des composants (10) sélectionné n'a pas été couronnée de succès, on continue à faire fonctionner le groupe (1) fonctionnel avec le logiciel ancien.

3. Procédé suivant la revendication 2, dans lequel
- chaque composant (10) sélectionné comprend deux partitions,
- on installe les paquets de logiciel nouveaux respectivement sur une première partition des composants (10) sélectionnés, et
- on met en mémoire des paquets du logiciel ancien sur des deuxièmes partitions respectives des composants (10) sélectionnés.

4. Procédé suivant l'une des revendications précédentes, dans lequel
- avant l'installation des paquets de logiciel nouveaux, l'unité (2) centrale transmet, à chacun des composants (10) sélectionnés du groupe (1) fonctionnel, l'instruction de passer dans un état d'attente,
- on contrôle ensuite, si les composants (10) sélectionnés du groupe (1) fonctionnel se trouvent dans l'état d'attente, et
- ce n'est que si tous les composants (10) sélectionnés sont dans l'état d'attente que l'on lance l'installation des paquets de logiciel nouveaux.

5. Procédé suivant l'une des revendications précédentes, dans lequel on commande et/ou on contrôle, par l'unité (2) centrale, l'installation des paquets de logiciel nouveaux sur les composants (10) sélectionnés.

6. Procédé suivant l'une des revendications précédentes, dans lequel la transmission des paquets de logiciel nouveaux sur les composants (10) sélectionnés s'effectue indépendamment de l'installation des paquets de logiciel nouveaux sur les composants (10) sélectionnés.

7. Procédé suivant l'une des revendications précédentes, dans lequel la transmission des paquets de logiciel nouveaux s'effectue sans fil.

8. Procédé suivant l'une des revendications précédentes, dans lequel le groupe (1) fonctionnel fait parti d'un système d'infrastructure critique.

9. Procédé suivant la revendication 8, dans lequel
- le système d'infrastructure critique est un système de trafic ferroviaire, et
- le groupe (1) fonctionnel est une installation de signal ou un poste d'aiguillage ou une partie d'un poste d'aiguillage ou une ligne de test pour un véhicule ferroviaire ou une ligne secondaire pour un véhicule ferroviaire ou une ligne principale pour un véhicule ferroviaire.

10. Système, comprenant
- une unité (2) centrale, et
- un groupe (1) fonctionnel ayant plusieurs composants (10), dans lequel
- chaque composant (10) comprend un processeur, une interface de communication et une mémoire, et
- le système est agencé pour effectuer un procédé suivant l'une des revendications précédentes.
